# EUROPÄISCHE PATENTSCHRIFT

(11) **EP 3 990 410 B1**
(45) Veröffentlichungstag und Bekanntmachung des Hinweises auf die Patenterteilung: **12.08.2026**
(21) Anmeldenummer: 20720914.9
(22) Anmeldetag: 30.04.2020
(51) Int. Cl.: C03C 25/002, B29C 64/118, B29C 64/135, C03B 37/14, C03C 25/25, C03C 25/30, C03C 25/321, C03C 25/40, B33Y 10/00

(54) **VERFAHREN ZUR HERSTELLUNG EINES DREIDIMENSIONALEN OBJEKTES AUS GLAS**
METHOD FOR MANUFACTURING A THREE-DIMENSIONAL OBJECT MADE OF GLASS
PROCÉDÉ DE FABRICATION D'UN OBJET TRIDIMENSIONNEL EN VERRE

(30) Priorität: 27.06.2019 EP 19182983
(43) Veröffentlichungstag der Anmeldung: 04.05.2022
(73) Patentinhaber: Heraeus Quarzglas GmbH & Co. KG, 63450 Hanau (DE)
(72) Erfinder: HÖNER, Miriam Sonja, 63450 Hanau (DE); HOFMANN, Achim, 63450 Hanau (DE)
(74) Vertreter: Gille Hrabal Partnerschaftsgesellschaft mbB Patentanwälte
(86) Internationale Anmeldenummer: PCT/EP2020/062022
(87) Internationale Veröffentlichungsnummer: WO 2020/259898

(56) Entgegenhaltungen:
- EP-A1- 3 034 480
- JP-A- H05 294 676
- POHL LEONHARD ET AL: "CO2 laser welding of glass: numerical simulation and experimental study", THE INTERNATIONAL JOURNAL OF ADVANCED MANUFACTURING TECHNOLOGY, SPRINGER, LONDON, vol. 90, no. 1, 2 September 2016 (2016-09-02), pages 397 - 403, XP036202197, ISSN: 0268-3768, [retrieved on 20160902], DOI: 10.1007/S00170-016-9314-9
- PHILIPP VON WITZENDORFF ET AL: "Additive manufacturing of glass: CO2-Laser glass deposition printing", PROCEDIA CIRP, vol. 74, 1 January 2018 (2018-01-01), NL, pages 272 - 275, XP055651207, ISSN: 2212-8271, DOI: 10.1016/j.procir.2018.08.109

## Beschreibung

### Technisches Gebiet

Die vorliegende Erfindung betrifft ein Verfahren zur Herstellung eines dreidimensionalen Objektes aus Glas, insbesondere aus Quarzglas, umfassend ein Umformen einer Glasfaser, wobei die mit einem Schutzmantel versehene Glasfaser kontinuierlich einer Heizquelle zugeführt, der Schutzmantel unter Einwirkung von Hitze entfernt und die Glasfaser erweicht wird.

Außerdem betrifft die Erfindung eine Glasfaser für die Fertigung eines dreidimensionalen Objektes aus Glas, wobei die Glasfaser mit einem Schutzmantel versehen ist.

Komplexe Bauteile aus Glas werden industriell durch Glaspresstechnik oder Schmelzformungsverfahren erzeugt. Diese Prozesse sind langwierig und erfordern hohe Verarbeitungstemperaturen sowie spezielle Werkzeuge und Formen, die zu Defekten und Störungen innerhalb der Glasstruktur und an der Oberfläche führen können.

Insbesondere für die Herstellung von Modellen und Prototypen oder bei kleinen Objekten und Stückzahlen gewinnen additive Fertigungstechniken an Bedeutung, die eine rasche Fertigung komplexer Geometrien ohne aufwändige Werkzeuge ermöglichen. Beispiele für additive Fertigungstechniken sind Stereolithographie, selektives Laserschmelzen oder -sintern und dreidimensionales Drucken. Dabei werden auf Grundlage berechneter Modelle feste, flüssige oder pulverförmige Ausgangsstoffe räumlich und zeitlich gesteuert auf eine Unterlage (Substrat, Plattform) abgegeben und schichtweise zu realen dreidimensionalen Objekten zusammengefügt.

### Stand der Technik

Erste additive Fertigungstechniken zur Herstellung von Glas haben formlose Ausgangsstoffe, wie beispielsweise Glaspulver oder Glasschmelze eingesetzt. Demgegenüber schlagen Junjie Luo; Luke J. Gilbert; Douglas A. Bristow; Robert G. Landers; Jonathan T. Goldstein; Augustine M. Urbas; Edward C. Kinzel in "Additive manufacturing of glass for optical applications" (Laser 3D Manufacturing III, Proc. of SPIE, Vol. 9738, 2016) die Herstellung von Objekten aus Quarzglas durch sukzessives Aufschweißen von Quarzglas-Filamenten vor. Die Filamente, die aus unbeschichteten Quarzglasfasern mit einem nominalen Außendurchmesser von 0,5 mm bestehen, werden dabei geradlinig einem Strahl eines CO₂-Lasers zugeführt, darin aufgeschmolzen und auf einem Substrat schichtweise zu einem Glasobjekt aufgeschweißt.

Unbeschichtete Quarzglasfasern sind jedoch bruchempfindlich und dürfen bei der Handhabung und Verarbeitung nicht gebogen werden, was beispielsweise das Bevorraten auf und das Abwickeln der Glasfilamente von einer Wickelspule verhindert.

Diesen Nachteil vermeidet eine Verfahrensweise der eingangs genannten Gattung, bei der Glasfilamente eingesetzt werden, die von einem Kunststoff-Schutzmantel umgeben sind. Ein derartiges Verfahren ist beschrieben von P. Von Witzendorff; L. Pohl; O. Suttmann; P. Heinrich; A. Heinrich; J. Zander; H. Bragard und S. Kaierle in "Additive manufacturing of glass: CO2-Laser glass deposition printing"; Procedia CIRP 74 (2018), S. 272-275. DOI: https://doi.org/10.1016/j.procir.2018.08.109.

Dabei wird eine 0,4 mm dicke Glasfaser mit Faserkern aus Quarzglas und einem 50 µm dicken Kunststoff-Schutzmantel quasi endlos von einer Wickelspule einem defokussierten Strahl eines CO₂-Lasers zugeführt. Der Schutzmantel wird dabei vom Laserstrahl abgebrannt, bevor das Quarzglas des Faserkerns aufschmilzt.

Die EP 3 034 480 A1 befasst sich mit der Herstellung von bioaktiven Geweben und Stoffen aus Glasfasern für den Einsatz im medizinischen und zahnmedizinischen Bereich. Die bioaktive Glasfaser kann zusätzlich mit einer mindestens 250 nm dicken bioaktiven Substanz beschichtet sein, wie etwa mit dem im Körper leicht resorbierbaren Kollagen I.

Aus der JP H05294676 A ist eine Glasfaser mit einer Schicht aus einer gesättigten höheren Fettsäure und/oder aus einem Alkylpolysiloxan bekannt. Die Schichtdicke beträgt etwa 0.1 µm.

Leonhard Pohl, Philipp von Witzendorff, Elisavet Chatzizyrli, Oliver Suttmann, Ludger Overmeyer beschreiben in "CO2 laser welding of glass: numerical simulation and experimental study"; The International Journal of Advanced Manufacturing Technology; Vol. 90, (2017); 397-403, die Herstellung von dreidimensionalen Objekten aus Glas unter Einsatz einer Glasfaser mit einem Durchmesser von 0,4 mm und einer 50 µm dicken Kunststoffschicht. Die Glasfaser wird geradlinig einem CO₂-Laserstrahl zugeführt und darin aufgeschmolzen. Die Zufuhrrate beträgt 300 mm/min.

### Technische Aufgabenstellung

Die Dicke von ca. 60 µm für den Schutzmantel ist eine Standard-Dicke für optische Glasfasern, die beispielsweise als UV-härtbares Coating während des Faserziehprozesses aufgetragen wird. Diese Dicke ist notwendig, um die Faser mechanisch und optisch langfristig vor Degradation zu schützen.

Kunststoffreste aus dem Schutzmantel im 3D-Objekt sind jedoch nicht akzeptabel; ein vollständiges Entfernen ist erforderlich. Beim Abbrennen des Kunststoff-Schutzmantels fallen große Mengen and Gasen und Verunreinigungen an, welche sich auf den umliegenden Oberflächen niederschlagen und ein blasen- und einschlussfreies Verschmelzen der Quarzglasfaser verhindern beziehungsweise erschweren.

Es wird berichtet, dass bei gleicher Laserleistung die Viskosität des Glases und das Aufschmelzverhalten der Glasfaser auf der Unterlage von der Aufheizdauer im Laserstrahl und damit von der Faserzufuhrrate abhängen. Mit zunehmender Rate variiert die Auftragung zwischen Verdampfung des Glasmaterials (zu hohe Temperatur), diskontinuierlichem, tropfenweisem Aufschmelzen, kontinuierlichem Aufschmelzen und Fehlen einer Schmelzverbindung (zu niedrige Temperatur).

Die Notwendigkeit, den Kunststoff-Schutzmantel vor dem Aufschmelzen der Glasfaser vollständig wegzubrennen, begrenzt den Spielraum für die Faserzufuhrrate nach oben und sie verlangsamt damit die Massenabscheiderate (in g/min). Dies macht sich besonders dann bemerkbar, wenn ein 3D-Objekt mit hoher räumlicher Auflösung angestrebt wird, was den Einsatz kleinerer Faserdurchmesser von beispielsweise weniger als 100 µm erfordert, und was die Massenabscheiderate auf wirtschaftlich nicht mehr interessante niedrige Werte begrenzen kann.

Es hat sich auch gezeigt, dass die mit Standard-Kunststoff-Schutzmantel versehene Glasfaser beim Erwärmen eine starke Verformungsneigung zeigt. Insbesondere erschweren Verwindungen der Glasfaser um die Faser-Längsachse die Einhaltung der modellseitig vorgegebenen Soll-Kontur des Glasobjektes und beispielsweise auch bereits das geradlinige Aufschweißen auf der Unterlage.

Der Erfindung liegt daher die Aufgabe zugrunde, ein Fertigungsverfahren unter Einsatz von Glasfilamenten, insbesondere von Quarzglasfasern, anzugeben, das wirtschaftlich ist und das die Herstellung von filigranen oder optisch möglichst verzerrungsfreien und transparenten Glas-Objekten erleichtert, und das insbesondere auch die Einstellung optischer und mechanischer Eigenschaften mit hoher räumlicher Auflösung ermöglicht.

Außerdem liegt der Erfindung die Aufgabe zugrunde, eine Glasfaser, insbesondere eine Glasfaser aus Quarzglas, bereitzustellen, die für den Einsatz in dem erfindungsgemäßen Fertigungsverfahren besonders angepasst und geeignet ist.

### Zusammenfassung der Erfindung

Hinsichtlich des Verfahrens wird diese Aufgabe ausgehend von einem Verfahren der eingangs genannten Gattung erfindungsgemäß dadurch gelöst, dass die Glasfaser einen Schutzmantel mit einer Schichtdicke im Bereich von 10 nm bis 10 µm aufweist.

Die Glasfaser ist zur Herstellung eines dreidimensionalen Objektes aus Glas, insbesondere aus Quarzglas einsetzbar. Das Fertigungsverfahren unter Einsatz von Glasfilamenten wird im Folgenden auch als "Auftragsschweißverfahren" bezeichnet, Der Einsatz einer mit Schutzmantel versehenen Glasfaser gemäß der Erfindung hat mehrere Vorteile:
(1) Die Dicke des Schutzmantels von mindestens 10 nm, vorzugsweise mindestens 50 nm genügt zum Schutz der Glasfaser vor mechanischen Beschädigungen, bei einem Einsatz als Zwischenprodukt, wie hier. Dadurch kann sie beispielsweise gemäß einer bevorzugten Verfahrensvariante auf einer Wickelrolle mit einem Wickeldurchmesser von weniger als 30 cm bevorratet und beim Auftragsschweißprozess kontinuierlich von dieser abgewickelt und der Heizquelle zugeführt werden.
   Die Glasfaser hat beispielsweise einen Durchmesser im Bereich von 20 µm bis 1000 µm, bevorzugt einen Durchmesser im Bereich von 50 µm bis 300 µm. Die Angaben zum Durchmesser der Glasfaser beziehen sich hier und im Folgenden auf den Durchmesser ohne den Schutzmantel. Bei Glasfasern mit nicht kreisrunder - beispielsweise ovaler oder polygonaler - Querschnittskontur beziehen sich die Angaben zum Durchmesser der Glasfaser auf den Durchmesser des die Kontur umhüllenden Umkreises.
(2) Der Schutzmantel wird unmittelbar vor dem Aufschmelzen der Glasfaser unter Einwirkung der Hitze der Heizquelle und ohne mechanischen Kontakt mit einem Werkzeug von der Glasfaser entfernt. Das Entfernen erfolgt beispielsweise durch Verdampfen und optional unterstützt durch Verbrennen (Pyrolyse) von Bestandteilen des Schutzmantels. Das Entfernen des Schutzmantels erfolgt im einfachsten Fall allein unter Einwirkung derjenigen Heizquelle, die auch zum Erweichen der Glasfaser eingesetzt wird. Es können aber auch zusätzliche Heizquellen oder andere Hilfsmittel eingesetzt werden, die beispielsweise für die oxidative Verbrennung des Schutzmantels besonders angepasst sind.
   Dabei trägt die geringe Dicke von weniger als 10 µm, vorzugsweise weniger als 5 µm, besonders bevorzugt weniger als 1 µm dazu bei, dass der Schutzmantel innerhalb kurzer Zeit möglichst rückstandsfrei verdampft und/oder pyrolysiert werden kann. Dies erlaubt eine hohe Zufuhrrate der Glasfaser und damit einhergehend eine ausreichende hohe Massenabscheiderate auch bei einem geringen Durchmesser der Glasfaser.
(3) Die geringe Dicke des Schutzmantels ermöglicht es auch, den Längenabschnitt kurz zu halten, in dem der Schutzmantel infolge der Einwirkung der Heizquelle entfernt ist. In diesem Längenabschnitt darf die Glasfaser nicht mehr gebogen und auch nicht mehr berührt werden, so dass sie keine Schäden nehmen und auch nicht brechen kann. Dieser Längenabschnitt ist daher so kurz wie möglich und hat vorzugsweise eine Länge im Bereich von 0,5 bis 2 cm.
(4) Es hat sich gezeigt, dass die vom Schutzmantel geringer Dicke befreite Glasfaser keine nennenswerte Verformungsneigung zeigt, was die Faserführung vereinfacht und eine höhere Positioniergenauigkeit und ein konturgetreues Umformen oder Aufschweißen der Faserlage, und insbesondere auch ein geradliniges Aufschweißen auf einer Unterlage ermöglicht. Dies erleichtert die Herstellung von optisch möglichst verzerrungsfreien Glasobjekten und die Einhaltung modellseitig vorgegebener optischer und mechanischer Eigenschaften.

Das erfindungsgemäße Verfahren unter Einsatz einer Glasfaser mit einem Schutzmantel geringer Dicke erlaubt eine vergleichsweise hohe Zufuhrrate der Glasfaser zur Heizquelle, die vorzugsweise mindestens 300 mm/min, vorzugsweise mindestens 450 mm/min beträgt.

Die durch den dünnen Schutzmantel ermöglichte hohe Zufuhrrate gewährleistet eine wirtschaftliche Durchführbarkeit des Auftragsschweißverfahrens mit hoher Massenabscheiderate.

Der Schutzmantel enthält vorzugsweise nur die Komponenten Kohlenstoff, Silizium, Wasserstoff, Stickstoff und Sauerstoff.

Diese Komponenten lassen sich über die Gasphase rückstandsfrei entfernen. Die Bildung giftiger Substanzen oder unerwünschter Rußpartikel und Feststoffe, die zu Verunreinigungen des Glasobjektes führen, wird vermieden.

Es hat sich bewährt, wenn der Schutzmantel ein organisches Material mit einer Zersetzungstemperatur von weniger als 400 °C enthält.

Das Entfernen des Schutzmantels erfolgt beispielsweise vollständig oder mindestens teilweise durch thermische Zersetzung des Schutzmantel-Materials in der Regel in Kombination mit einer Oxidationsreaktion. Je niedriger die Zersetzungstemperatur ist, umso schneller gelingt das Entfernen des Schutzmantel-Materials.

Geeignete organische Materialien, die sich durch eine niedrige Zersetzungstemperatur auszeichnen sind Polysaccharide oder Tenside, insbesondere kationische Tenside oder Polyether-Polymere, wie beispielsweise Polyethylenglycol, Polyalkylenglykol, Polyethylenoxid und/oder Polyalkylenoxid.

Alternativ dazu ist der Schutzmantel aus einem oder mehreren fluorfreien Silanen und/oder aus fluorfreien Tensiden, insbesondere kationischen fluorfreien Tensiden erzeugt.

Dadurch, dass die Ausgangssubstanzen frei von Fluor sind, wird beim Entfernen des Schutzmantels die Freisetzung von Fluor und die Reaktion zu Flusssäure und ein damit einhergehender korrosiver Angriff auf das Glas der Glasfaser oder des dreidimensionalen Glasobjekts vermieden.

Bei kommerziellen optischen Fasern für die Telekommunikation wird der Schutzmantel üblicherweise beim Faserziehprozess direkt auf die frisch gezogene Glasfaser aufgebracht, indem diese durch eine Beschichtungs-Küvette geleitet wird, in der das Schutzmantel-Material in monomerer, flüssiger Form enthalten ist. Die mit dem Monomer benetzte Glasfaser verlässt die Beschichtungs-Küvette über eine Düse, die die Dicke der anhaftenden Monomerschicht bestimmt und das überflüssige Monomermaterial abstreift. Um Verletzungen der Glasfaser-Oberfläche zu vermeiden, ist zwischen der Düsenwand und der Glasfaser ein Mindestabstand einzuhalten, der die Mindestdicke des Schutzmantels nach dem Aushärten der Monomerschicht bestimmt.

Beim erfindungsgemäßen Verfahren wird auf der Glasfaser ein Schutzmantel mit geringer Dicke erzeugt, die wegen des Erfordernisses des besagten Mindestabstandes nur schwierig über eine Düse einstellbar ist. Daher wird der Schutzmantel bevorzugt durch Tauchen oder durch Walzenbeschichtung auf der Glasfaser erzeugt.

Dabei wird der Schutzmantel nicht per Düse auf die Glasfaser aufgebracht, sondern beispielsweise durch Eintauchen der Glasfaser in ein Bad, das eine Beschichtungslösung enthält, aus der der Schutzmantel erzeugt wird, oder durch Leiten der Glasfaser auf eine Walzenoberfläche, auf der sich ein Film der Beschichtungslösung befindet. Da der Schutzmantel lediglich einen temporären mechanischen Schutz gewährleisten muss, kann er auch mit dünnflüssigen, beispielsweise auch wässrigen Beschichtungslösungen erzeugt werden.

Die Heizquelle dient zum Aufschmelzen der Glasfaser, sie unterstützt oder bewirkt das Entfernen des Schutzmantels und sie erweicht die Oberfläche der gegebenenfalls beim Auftragsschweißen vorhandenen Unterlage und fördert damit die Haftung zwischen aufgeschmolzenem Glas der Glasfaser auf der Unterlage. Bei Einsatz eines Laserstrahls als Heizquelle hat es sich bewährt, wenn die Glasfaser-Längsachse mit der Hauptausbreitungsrichtung des Laserstrahls einen Winkel im Bereich zwischen 30 und 100 Grad einschließt. Dieser Winkel beeinflusst den Beginn des Einwirkungsbereichs des Laserstahls auf den Schutzmantel. Je spitzer der Winkel ist, umso früher erwärmt der Laserstrahl den Schutzmantel.

Hinsichtlich der Glasfaser für die Fertigung eines dreidimensionalen Objektes aus Glas wird die oben angegebene technische Aufgabe ausgehend von einer Glasfaser der eingangs genannten Gattung erfindungsgemäß dadurch gelöst, dass die Glasfaser einen Schutzmantel mit einer Schichtdicke im Bereich von 10 nm bis 10 µm aufweist.

Die mit Schutzmantel versehene Glasfaser gemäß der Erfindung ist als Zwischenprodukt für den Einsatz in einem additiven Fertigungsverfahren besonders geeignet, wie beispielsweise in einem Auftragsschweißprozess, und insbesondere in einem Verfahren gemäß der vorliegenden Erfindung, wie es oben näher beschrieben ist:
(1) Die Dicke des Schutzmantels von mindestens 10 nm, vorzugsweise mindestens 50 nm genügt zum Schutz der Glasfaser vor mechanischen Beschädigungen als Zwischenprodukt. Dadurch kann sie beispielsweise gemäß einer bevorzugten Ausführungsform bei einem Durchmesser im Bereich von 20 µm bis 1000 µm, vorzugsweise mit einem Durchmesser im Bereich von 50 bis 300 µm auf einer Wickelrolle mit einem Wickeldurchmesser von weniger als 30 cm bevorratet sein, und beim Auftragsschweißprozess kontinuierlich von dieser abgewickelt werden.
(2) Der Schutzmantel hat eine Dicke von weniger als 10 µm, vorzugsweise weniger als 5 µm, besonders bevorzugt weniger als 1 µm. Er ist vergleichsweise dünn und kann innerhalb kurzer Zeit möglichst rückstandsfrei verdampft und/oder pyrolysiert werden.
(3) Die vom Schutzmantel geringer Dicke befreite Glasfaser zeigt keine nennenswerte Verformungsneigung, was beim Auftragsschweißverfahren die Faserführung vereinfacht und eine höhere Positioniergenauigkeit und ein konturgetreues Umformen oder Aufschweißen der Faserlage, und insbesondere auch ein geradliniges Aufschweißen auf einer Unterlage oder präzises Erstarren in Luft ermöglicht.

Der Einsatz der erfindungsgemäßen Glasfaser in einem Auftragsschweißverfahren erleichtert die Herstellung von optisch möglichst verzerrungsfreien Glasobjekten und die Einhaltung modellseitig vorgegebener optischer und mechanischer Eigenschaften. Sowie eine vergleichsweise hohe Zufuhrrate der Glasfaser zur Heizquelle und damit eine wirtschaftliche Durchführbarkeit des Auftragsschweißverfahrens mit hoher Massenabscheiderate.

Vorteilhafte Ausgestaltungen der erfindungsgemäßen Glasfaser ergeben sich aus den Unteransprüchen. Soweit in den Unteransprüchen angegebene Ausgestaltungen der Glasfaser den in Unteransprüchen zum erfindungsgemäßen Verfahren genannten Verfahrensweisen nachgebildet sind, wird zur ergänzenden Erläuterung auf die obigen Ausführungen zu den entsprechenden Verfahrensansprüchen verwiesen.

### Definition

### Glasfaser

Die Glasfaser (gleichbedeutend mit "Glasfilament") besteht aus Glas. Das Glas ist beispielsweise ein Einkomponentenglas wie Quarzglas oder es ist ein Mehrkomponentenglas wie Borosilikatglas. Das Einkomponentenglas kann zusätzliche Dotierstoffe enthalten. Unter Quarzglas wird hier ein Glas verstanden, das einen SiO₂-Gehalt von mindestens 90 Gew.-% hat.

Die Glasfaser ist massiv oder sie enthält einen Hohlkanal oder mehrere Hohlkanäle (im Folgenden auch als "Kapillare" bezeichnet) oder einen dotierten Kern. Bei einer Glasfaser mit einem Hohlkanal verläuft die Hohlkanal-Mittelachse vorzugsweise in der Faser-Längsachse.

Die Glasfaser (beziehungsweise die Kapillare) hat einen Querschnitt (mit Sicht auf die Faser-Längsachse) der kreisrund oder nicht kreisrund ist. Der nicht-kreisrunde Querschnitt ist beispielsweise oval, polygonal, insbesondere quadratisch, rechteckig, 6-eckig, 8-eckig oder er ist trapezförmig, gerillt, sternförmig oder er hat an einer Seite oder an mehreren Seiten Abflachungen oder nach innen (konkav) oder nach außen (konvex) gekrümmte Flächen.

### Ausführungsbeispiel

Nachfolgend wird die Erfindung anhand eines Ausführungsbeispiels und einer Zeichnung näher erläutert. Im Einzelnen zeigt in schematischer Darstellung
- **Figur 1**: eine erste Ausführungsform des experimentellen Aufbaus zur Durchführung von Versuchen zum Auftragsschweißen unter Einsatz von Glasfilamenten gemäß der Erfindung,
- **Figur 2**: eine Mikroskopaufnahme eines Auftragsschweiß-Vorversuchs unter Einsatz einer Referenzglasfaser,
- **Figur 3**: eine Mikroskopaufnahme eines Auftragsschweiß-Vorversuchs unter Einsatz einer Glasfaser gemäß der Erfindung, und
- **Figur 4**: eine weitere Ausführungsform des experimentellen Aufbaus zur Durchführung von Versuchen zum Auftragsschweißen unter Einsatz von Glasfilamenten gemäß der Erfindung.

### Vorversuche

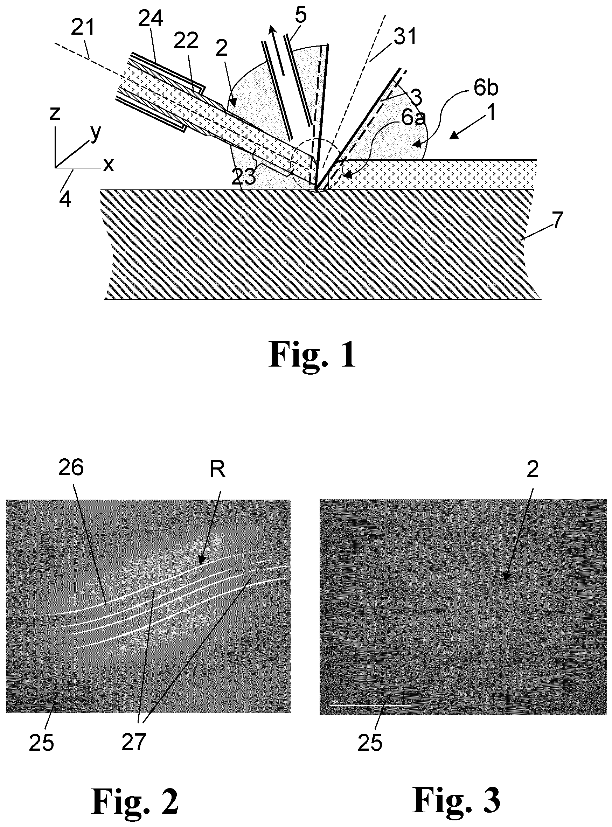

Zur Überprüfung der Handhabbarkeit, Aufschweißbarkeit und generellem Verhalten wurden Auftragsschweiß-Vorversuche an Quarzglasfasern mit unterschiedlichen Schutzmänteln durchgeführt. Ergebnisse dazu zeigen die mikroskopischen Aufnahmen der **Figuren 2 und 3****.** Die Maßstabsbalken 25 kennzeichnen jeweils die Länge von 1 mm.

Dabei wurden Quarzglasfasern mit einem Durchmesser von 220 µm und mit einem Standard-Kunststoffmantel mit einer Dicke von ca. 62,5 µm als Referenzfasern "R" eingesetzt, und diese mit Quarzglasfasern mit gleichem Durchmesser, aber mit einer dünnen Beschichtung gemäß der Erfindung durchgeführt (Glasfasern 2). Die Beschichtung hat eine Dicke von weniger als 50 nm. Ihre Zusammensetzung und Herstellung werden weiter unten noch näher erläutert.

Die Quarzglasfasern (R; 2) wurden jeweils direkt auf eine Quarzglasplatte aufgelegt und mit einem Klebstreifen fixiert. Als Heizquelle zum Erweichen der Quarzglasfasern und zum Wegbrennen der Beschichtungen wurde jeweils ein Knallgas-Heizbrenner verwendet. Der Knallgas-Brenner führt die zum Aufschmelzen der Quarzglasfasern erforderliche Wärme zu und gleichzeitig Sauerstoff für die Pyrolyse des Schutzmantels durch überstöchiometrischen Sauerstoff in der Knallgasflamme.

### Beobachtungen und Ergebnisse:

Es zeigt sich, dass sich die Referenz-Glasfaser "R" stets unter Einwirkung des Heizbrenners bewegt und verwindet. Dies ist durch die entstehenden Gase sowie nicht-axiale Spannungen, die durch das ungleichmäßige Abbrennen des Coatings hervorgerufen werden zu begründen. Daher wurden die Faserenden vor dem Aufschweißen mit Klebeband an der Quarzglasplatte befestigt, um diese Bewegung zumindest einzuschränken.

Dieses Verhalten zeigte die Glasfasern 2 mit dünner Beschichtung nicht. Diese Glasfaser 2 ließ sich beim Aufschweißen wesentlich einfacher handhaben und musste auch nicht fixiert werden.

Beide Faserarten konnten auf das Substrat 7 aufgeschweißt werden. Trotz Fixierung konnten die Referenz-Glasfasern R aber nicht in gerader Linie auf das Substrat 7 aufgeschweißt werden. Die Welligkeit der aufgeschweißten Fasern betrug bei der Referenz-Glasfaser 5 mm pro 120 mm Aufschweißlänge, und im Fall der erfindungsgemäßen Glasfaser 2 ergab sich eine sehr geradlinige Aufschweißung ohne nennenswerte Welligkeit.

Die hellen Reflexe 26 der Aufnahme von **Figur 2** machen die Verwindungen der Referenz-Glasfaser auf der Unterlage deutlich. Die schwarzen Punkte 27 zeigen außerdem, dass bei der Referenz-Glasfaser R mehr Blasen entlang der Aufschweißlänge entstanden als bei der erfindungsgemäßen Glasfaser 2. Auf einer Länge von jeweils 5 cm wurden bei der Referenz-Glasfaser R einundzwanzig Blasen gezählt.

**Figur 3** zeigt das Ergebnis des Aufschweißversuchs bei Einsatz der erfindungsgemäßen Glasfaser 2. Diese zeigt einen geradlinigen Verlauf entlang der Aufschweißlänge und außerdem eine geringe Anzahl von nur sechs Blasen auf einer Länge von 5 cm.

**Figur 1** zeigt schematisch den experimentellen Aufbau zur Durchführung der additiven Fertigung eines Glasobjekts 1 durch Auftragsschweißen unter Einsatz einer anhand der Vorversuche als geeignet ermittelten Glasfaser 2.

Dabei wird die auf einer Wickelspule mit einem minimalen Durchmesser von 30 cm aufgewickelte Glasfaser 2 kontinuierlich mittels eines Faserführungssystems (in der Figur nicht gezeigt) von der Wickelspule abgewickelt und durch eine Führungshülse 24 einer Aufschmelzzone 6a zugeführt, in der ein defokussierter Laserstrahl 3 als Heizquelle dient. Durch die Defokussierung, die in der Figur als gestrichelte Linie um den Laserstrahl 3 angedeutet ist, werden Spitzen in der Hitzeverteilung kompensiert. Idealerweise ist der Laserstrahl 3 am Auftreffpunkt etwa doppelt so breit wie der Durchmesser der aufzuschmelzenden Glasfaser 3, so dass sowohl die Glasfaser 3 als auch der umgebende Bereich und insbesondere das Substrat 7 erwärmt werden.

Dabei schließt die Glasfaser-Längsachse 21 mit der Hauptausbreitungsrichtung 31 des Laserstrahls 3 einen Winkel von ca. 90 Grad ein. Als Laser wird ein CO₂-Laser mit einer maximalen Ausgangsleistung von 120 W verwendet. Der Laserstrahl 3 schmilzt das Ende der Glasfaser 2 kontinuierlich auf, und er erhitzt den Schutzmantel 22 der Glasfaser, so dass dieser thermisch zersetzt wird. Außerdem erweicht er die Oberfläche des Substrats 7 und fördert damit die Haftung zwischen aufgeschmolzenem Glas der Glasfaser 2 und dem Glassubstrat 7. Die vom Laserstrahl 3 erzeugte Erhitzungszone ist in Figur 1 schematisch durch den grau hinterlegten Bereich 6b angedeutet.

Ein Absaugröhrchen 5 ragt möglichst nahe an die Aufschmelzzone 6a heran. Die aus einem Glassubstrat 7 bestehende Plattform liegt auf einem numerisch gesteuerten Verschiebetisch (angedeutet durch das x-y-z-Koordinatensystem 4) auf und ist in allen Raumrichtungen verschiebbar.

Die Glasfaser 2 hat einen kreisrunden Querschnitt und einen Durchmesser von 220 µm. Sie ist mit einer sehr dünnen Beschichtung 22 mit einer Dicke von weniger als 100 nm versehen.

Die (dünne) Schicht 22 wird durch Durchziehen der Glasfaser 2 durch eine 10-prozentige wässrige Lösung Cetyltrimethylammoniumchlorid erzeugt.

Die Schicht 22 hat eine Zersetzungstemperatur von weniger als 400 °C. Sie ist so dünn, dass sie schnell und effizient online, direkt vor der Aufschmelzzone 6a vollständig abgebrannt werden kann, während die Glasfaser 2 weiter und kontinuierlich der Aufschmelzzone 6a zugeführt wird.

Dies erlaubt eine hohe Prozessgeschwindigkeit. Die Glasfaser-Zufuhrrate zur Aufschmelzzone 6a wird auf einen Wert im Bereich von 300 bis 600 mm/min so eingestellt, dass die Beschichtung 22 stets vollständig entfernt ist, bevor die Glasfaser 2 die Aufschmelzzone 6a erreicht, und außerdem so, dass der Längenabschnitt 23, in dem die Beschichtung 22 bereits vollständig entfernt ist, eine Länge von weniger als 2 cm hat. Dadurch wird eine mechanische Beschädigung der unbeschichteten Glasfaser 2 verhindert.

Infolge der geringen Schichtdicke der Beschichtung 22 fallen außerdem nur wenig Abbrennprodukte an, die mittels der Absaugung 5 leicht entfernt werden können. Dies ermöglicht eine blasenfreie Verschmelzung der Glasfaser 2 mit dem Substrat 7.

Ergebnis des Verschweißens von Glasfaser 2 und Substrat 7 ist ein dreidimensionales Glasobjekt 1 ohne Defekte und Blasen.

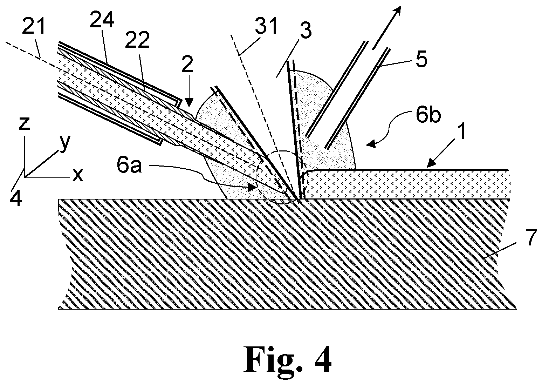

**Figur 4** zeigt schematisch eine Abwandlung des experimentellen Aufbaus zur Durchführung der additiven Fertigung eines Glasobjekts. Dabei sind die gleichen Bezugsziffern wie in Figur 1 zur Bezeichnung identischer oder äquivalenter Bestandteile des Aufbaus verwendet.

Im Unterschied zum Aufbau von Figur 1 schließt die Glasfaser-Längsachse 21 mit der Hauptausbreitungsrichtung 31 des Laserstrahls 3 hier einen etwas spitzeren Winkel von 45 Grad ein. Infolge der im Vergleich zu Figur 1 anderen Orientierung des Laserstrahls 3 zeigt auch der Erhitzungsbereich 6b eine andere Ausbreitung und einen anderen Schwerpunkt. Er überstreicht einen größeren Bereich der Glasfaser 2 und bewirkt dadurch bei gleicher Temperatur eine effektivere Erwärmung von Glasfaser 2 und Schutzmantel 22.

Auch in diesem Fall ist das Absaugröhrchen 5 möglichst nahe an die Aufschmelzzone 6a herangeführt.

## Patentansprüche

1. Verfahren zur Herstellung eines dreidimensionalen Objektes (1) aus Glas, insbesondere aus Quarzglas, umfassend ein Umformen einer Glasfaser (2), wobei die mit einem Schutzmantel (22) versehene Glasfaser (2) kontinuierlich einer Heizquelle (3) zugeführt, der Schutzmantel (22) unter Einwirkung von Hitze entfernt und die Glasfaser (2) erweicht wird, **dadurch gekennzeichnet, dass** die Glasfaser (2) einen Schutzmantel (22) mit einer Schichtdicke im Bereich von 10 nm bis 10 µm aufweist.

2. Verfahren nach Anspruch 1, **dadurch gekennzeichnet, dass** eine Glasfaser (2) mit einem Schutzmantel (22) mit einer Schichtdicke im Bereich von 50 nm bis 5 µm, vorzugsweise mit einer Schichtdicke von weniger als 1 µm eingesetzt wird.

3. Verfahren nach einem der Ansprüche 1 oder 2, **dadurch gekennzeichnet, dass** die Glasfaser (2) der Heizquelle (3) mit einer Zufuhrrate vom mindestens 300 mm/min, vorzugsweise mindestens 450 mm/min zugeführt wird.

4. Verfahren nach einem oder mehreren der vorhergehenden Ansprüche,
**dadurch gekennzeichnet, dass** eine Glasfaser (2) eingesetzt wird, die einen Durchmesser im Bereich von 20 µm bis 1000 µm, vorzugsweise einen Durchmesser im Bereich 50 µm bis 300 aufweist, und die vorzugsweise auf einer Aufwickelspule aufgewickelt ist und der Heizquelle (3) durch Abwickeln von der Aufwickelspule zugeführt wird.

5. Verfahren nach einem oder mehreren der vorhergehenden Ansprüche,
**dadurch gekennzeichnet, dass** ein Längenabschnitt (23), in dem der Schutzmantel (22) entfernt ist, eine Länge im Bereich von 0,5 bis 2 cm hat.

6. Verfahren nach einem oder mehreren der vorhergehenden Ansprüche,
**dadurch gekennzeichnet, dass** der Schutzmantel (22) nur aus den Komponenten Kohlenstoff, Silizium, Wasserstoff, Stickstoff und Sauerstoff besteht.

7. Verfahren nach einem oder mehreren der vorhergehenden Ansprüche,
**dadurch gekennzeichnet, dass** der Schutzmantel (22) eine Zersetzungstemperatur von weniger als 400 °C hat.

8. Verfahren nach einem oder mehreren der vorhergehenden Ansprüche,
**dadurch gekennzeichnet, dass** der Schutzmantel (22) aus einem organischen Material, insbesondere aus Polysacchariden oder aus Tensiden, vorzugsweise aus kationischen Tensiden oder aus einem Polyether-Polymer besteht, vorzugsweise Polyethylenglycol, Polyalkylenglykol, Polyethylenoxid und/oder Polyalkylenoxid.

9. Verfahren nach einem oder mehreren der Ansprüche 1 bis 5, **dadurch gekennzeichnet, dass** der Schutzmantel (22) aus einem oder mehreren fluorfreien Silanen und/oder aus fluorfreien Tensiden, insbesondere kationischen fluorfreien Tensiden erzeugt ist.

10. Verfahren nach einem oder mehreren der vorhergehenden Ansprüche,
**dadurch gekennzeichnet, dass** der Schutzmantel (22) durch Tauchen oder Walzenbeschichtung auf der Glasfaser (2) erzeugt wird.

## Claims

1. A method for producing a three-dimensional object (1) from glass, in particular from quartz glass, the method comprising reshaping a glass fiber (2), wherein the glass fiber (2), which is provided with a protective covering (22), is continuously fed to a heat source (3), the protective covering (22) is removed under the influence of heat and the glass fiber (2) is softened, **characterized in that** the glass fiber (2) comprises a protective covering (22) having a layer thickness in the range of 10 nm to 10 µm.

2. The method according to claim 1, **characterized in that** a glass fiber (2) having a protective covering (22) having a layer thickness in the range of 50 nm to 5 µm, preferably having a layer thickness of less than 1 µm, is used.

3. The method according to either of claims 1 or 2, **characterized in that** the glass fiber (2) is fed to the heat source (3) at a feed rate of at least 300 mm/min, preferably at least 450 mm/min.

4. The method according to one or more of the preceding claims, **characterized in that** a glass fiber (2) is used which has a diameter in the range of 20 µm to 1000 µm, preferably a diameter in the range of 50 µm to 300, and which is preferably wound on a winding spool and is fed to the heat source (3) by unwinding from the winding spool.

5. The method according to one or more of the preceding claims, **characterized in that** a length portion (23) in which the protective covering (22) is removed has a length in the range of 0.5 to 2 cm.

6. The method according to one or more of the preceding claims, **characterized in that** the protective covering (22) consists only of the components carbon, silicon, hydrogen, nitrogen and oxygen.

7. The method according to one or more of the preceding claims, **characterized in that** the protective covering (22) has a decomposition temperature of less than 400°C.

8. The method according to one or more of the preceding claims, **characterized in that** the protective covering (22) consists of an organic material, in particular of polysaccharides or of surfactants, preferably of cationic surfactants or of a polyether polymer, preferably polyethylene glycol, polyalkylene glycol, polyethylene oxide and/or polyalkylene oxide.

9. The method according to one or more of claims 1 to 5, **characterized in that** the protective covering (22) is produced from one or more fluorine-free silanes and/or from fluorine-free surfactants, in particular cationic fluorine-free surfactants.

10. The method according to one or more of the preceding claims, **characterized in that** the protective covering (22) is produced by dipping or roll coating on the glass fiber (2).

## Revendications

1. Procédé pour la fabrication d'un objet tridimensionnel (1) en verre, en particulier en verre de quartz, comprenant un formage d'une fibre de verre (2), dans lequel la fibre de verre (2) pourvue d'une gaine protectrice (22) est amenée en continu à une source de chaleur (3), la gaine protectrice (22) est éliminée sous l'effet de la chaleur et la fibre de verre (2) est ramollie, **caractérisé en ce que** la fibre de verre (2) présente une gaine protectrice (22) comportant une épaisseur de couche comprise dans la plage allant de 10 nm à 10 µm.

2. Procédé selon la revendication 1, **caractérisé en ce qu'**est utilisée une fibre de verre (2) comportant une gaine protectrice (22) comportant une épaisseur de couche comprise dans la plage allant de 50 nm à 5 µm, de préférence comportant une épaisseur de couche inférieure à 1 µm.

3. Procédé selon l'une des revendications 1 ou 2, **caractérisé en ce que** la fibre de verre (2) est amenée à la source de chaleur (3) à une vitesse d'amenée d'au moins 300 mm/min, de préférence d'au moins 450 mm/min.

4. Procédé selon l'une ou plusieurs des revendications précédentes,
**caractérisé en ce qu'**une fibre de verre (2) est utilisée, laquelle présente un diamètre compris dans la plage allant de 20 µm à 1000 µm, de préférence un diamètre compris dans la plage allant de 50 µm à 300, et laquelle est de préférence enroulée sur une bobine d'enroulement et est amenée à la source de chaleur (3) par déroulement depuis la bobine d'enroulement.

5. Procédé selon l'une ou plusieurs des revendications précédentes, **caractérisé en ce qu'**une section longitudinale (23), dans laquelle la gaine protectrice (22) est éliminée, possède une longueur comprise dans la plage allant de 0,5 à 2 cm.

6. Procédé selon l'une ou plusieurs des revendications précédentes, **caractérisé en ce que** la gaine protectrice (22) est constituée uniquement des composants carbone, silicium, hydrogène, azote et oxygène.

7. Procédé selon l'une ou plusieurs des revendications précédentes, **caractérisé en ce que** la gaine protectrice (22) possède une température de décomposition inférieure à 400 °C.

8. Procédé selon l'une ou plusieurs des revendications précédentes, **caractérisé en ce que** la gaine protectrice (22) est constituée d'un matériau organique, en particulier de polysaccharides ou de tensioactifs, de préférence de tensioactifs cationiques ou d'un polymère polyéther, de préférence de polyéthylène glycol, polyalkylène glycol, poly(oxyéthylène) et/ou poly(oxyalkylène).

9. Procédé selon l'une ou plusieurs des revendications 1 à 5, **caractérisé en ce que** la gaine protectrice (22) est produite à partir d'un ou de plusieurs silanes exempts de fluor et/ou de tensioactifs exempts de fluor, en particulier de tensioactifs cationiques exempts de fluor.

10. Procédé selon l'une ou plusieurs des revendications précédentes, **caractérisé en ce que** la gaine protectrice (22) est produite par trempage ou par enduction par rouleau sur la fibre de verre (2).
